Europäisches Patentamt

European Patent Office

Office européen des brevets

(11) Veröffentlichungsnummer: **0 474 970 A1**

# (12) EUROPÄISCHE PATENTANMELDUNG

(21) Anmeldenummer: **91108585.0**

(22) Anmeldetag: **27.05.91**

(51) Int. Cl.⁵: **A22C 11/10**

(30) Priorität: **28.08.90 DE 9012339 U**

(43) Veröffentlichungstag der Anmeldung:
**18.03.92 Patentblatt 92/12**

(84) Benannte Vertragsstaaten:
**AT CH DE ES FR GB IT LI**

(71) Anmelder: **Albert Handtmann
Maschinenfabrik GmbH & Co. KG
Birkenallee 25-29
W-7950 Biberach a.d. Riss 1(DE)**

(72) Erfinder: **Stöhr, Jochen
Oedenwaldstrasse 7b
W-7957 Ingerkingen(DE)**

(74) Vertreter: **Patentanwälte Grünecker,
Kinkeldey, Stockmair & Partner
Maximilianstrasse 58
W-8000 München 22(DE)**

(54) **Vorrichtung zum Abteilen eines von einer Füllmaschine kommenden durchgehenden Wurststranges in einzelne Würste.**

(57) Die Erfindung betrifft eine Vorrichtung zum Abteilen eines von einer Füllmaschine kommenden durchgehenden Wurststranges in einzelne Würste.

Um eine solche Vorrichtung bezüglich der Verluste an den Einschnürungen zu verbessern, ist vorgesehen, daß Verdrängerelemente (9), die beim Abteilvorgang ineinandergreifen, aus einem Drahtbügel (20) bestehen, der in der Kontur einer V-förmigen Platte gebogen ist.

FIG.7

Die Erfindung betrifft eine Vorrichtung zum Abteilen eines von einer Füllmaschine kommenden durchgehenden Wurststranges in einzelne Würste, bestehend aus einer Einrichtung zum Drehen des Wurststranges, einer Abteileinrichtung und einer die abgeteilten Würste weiterfördernden Transporteinrichtung, wobei die Abteileinrichtung mindestens zwei um je eine Antriebsachse gegenläufig umlaufende angetriebene Verdrängerelemente aufweist, die jeweils als V-förmige Platten ausgebildet sind, welche Verdrängerelemente gegensinnig schräg angeordnet sind und beim Abteilvorgang mit den V-Ausschnitten verschränkt ineinandergreifen.

Bei einer bekannten Vorrichtung dieser Art (DDR-PS 247 829) sind die Verdrängerelemente als Rippen an zwei Förderrollen angebracht, wobei die Verdrängerrippen im Eingriff einen sowohl in axialer als auch in radialer Richtung verhältnismäßig großen Durchlaß freilassen, so daß an der Einschnürungsstelle im Wurstdarm in beträchtlichem Maße Brät verbleibt, das für den Verzehr verloren ist. Die beiden die Verdrängerelemente tragenden Förderrollen weisen einen gemeinsamen Antrieb mit der Transporteinrichtung auf, so daß nur Würste einer bestimmten Länge hergestellt werden können.

Der Erfindung liegt das technische Problem zugrunde, eine solche Vorrichtung bezüglich der Verluste an den Einschnürungen zu verbessern.

Zur Lösung dieses technischen Problems sieht die Erfindung bei einer solchen Vorrichtung vor, daß jedes Verdrängerelement aus einem Drahtbügel besteht, der in der Kontur der V-förmigen Platte gebogen ist.

Durch diese Maßnahme wird erreicht, daß sich die Drahtbügel-Verdrängerlemente während des verschränkten Ineinandergreifens nicht stören, so daß die Einschnürung im Wurstdarm so eng erzielt werden kann, daß sich keinerlei Brät mehr an der Einschnürstelle an der Wursthülle befindet, also Verluste weitestgehend vermieden werden. Außerdem kann insbesondere bei empfindlichen Wursthüllen eine höhere Portionierleistung erzielt werden.

Nachdem die Verdrängerelemente um Antriebsachsen umlaufen, die quer zur Transportrichtung des Wurststranges angeordnet sind, können die Einsatzmöglichkeiten einer solchen Vorrichtung mit drahtbügelförmigen Verdrängerelementen dadurch verbessert werden, daß die Verdrängerelemente eine eigene Einheit mit einem eigenen Antrieb bilden, dessen Drehzahl während des Umlaufes durch eine elektronische Steuerung regelbar ist. Somit können praktisch ohne Verluste in den Einschnürungen je nach der Umlaufgeschwindigkeit der Verdrängerelemente längere oder auch kürze Würste abgeteilt werden.

Ein optimales Ineinandergreifen der Drahtbügel-Verdrängerelemente kann dadurch erzielt werden, daß jeder V-förmige Drahtbügel im Bereich der V-Wurzel abgekröpft ist, so daß die V-Schenkel in benachbarten, etwa parallelen Ebenen angeordnet sind, die etwa im Abstand des Drahtdurchmessers verlaufen.

Dabei kann der Draht, der beispielsweise aus einem Chrom-Nickelstahl besteht, einen Durchmesser von etwa 2 mm aufweisen, also relativ dünn sein, so daß auch dadurch die Drahtbügel-Verdrängerelemente beim Ineinandergreifen sehr dicht beieinanderliegen können.

Weitere Merkmale und Vorteile der Erfindung ergeben sich aus der nachfolgenden Beschreibung in Verbindung mit der Zeichnung, in welcher ein Ausführungsbeispiel der Vorrichtung dargestellt ist.

Dabei Zeigen:

| | |
|---|---|
| Figur 1 | schematisch die Vorrichtung in Seitenansicht, |
| Figur 2 | eine Draufsicht auf die Vorrichtung, |
| Figur 3 | eine Seitenansicht eines Paares Drahtbügel-Verdrängerelemente an einem Lagerkörper, wobei die Endlosbänder derr besseren Übersicht wegen um 90° gedreht dargestellt sind, |
| Figur 4 | dazu eine Draufsicht im Schnitt nach der Linie III-III, |
| Figur 5 | eine Seitenansicht von zwei Drahtbügel-Verdrängerelementen im Endzustand des Ineinandergreifens, |
| Figur 6 | eine Frontansicht zweier ineinandergreifenden Drahtbügel-Verdrängerelemente und |
| Figur 7 | eine perspektivische Darstellung zweier Drahtbügel-Verdrängerelemente vor dem Endzustand des Ineinandergreifens. |

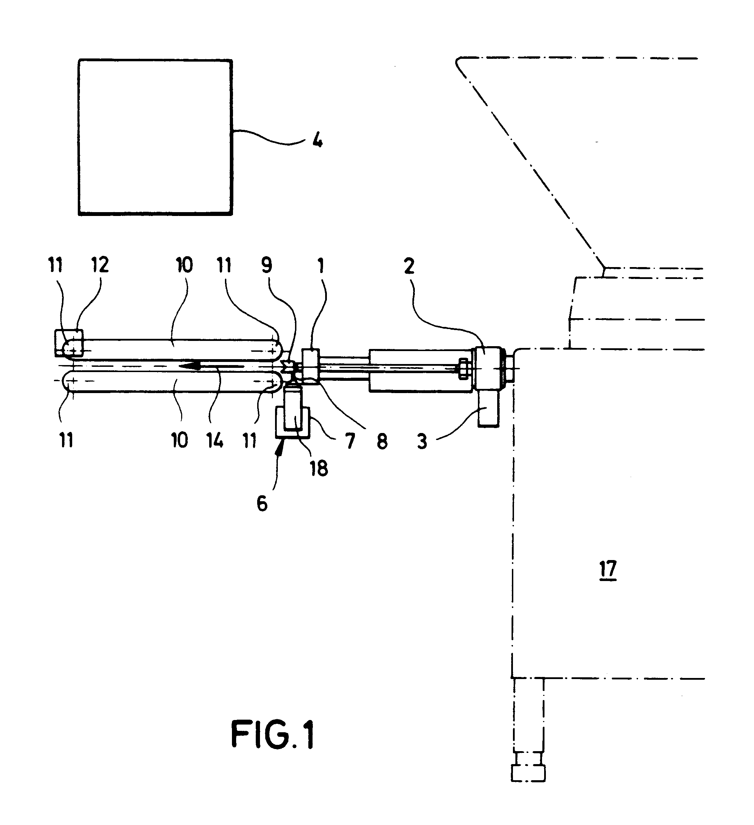

In Figur 1 ist strichpunktiert die mit 17 bezeichnete Füllmaschine dargestellt, aus welcher kontinuierlich das Füllgut in Strangform austritt und in der üblichen Weise in die Hülle eingefüllt wird. Der so geschaffene Wurststrang wird durch die zentrische Öffnung eines Bremsringes 1 gefördert, der durch ein Abdrehgetriebe 2 in Drehung versetzt werden kann und dabei den Wurststrang mitdreht.

Das Abdrehgetriebe 2 wird von einem Elektromotor 3 angetrieben, der von einer elektronischen Steuerung 4 drehzahlgeregelt wird.

Unmittelbar nach dem Bremsring 1 gelangt der Wurststrang zu einer Abteileinrichtung, die aus einer insgesamt mit 6 bezeichneten Verdrängereinheit besteht. Diese Verdrängereinheit 6 wird dargestellt durch einen Elektromotor 7, der mit einem Getriebe 18 zusammengebaut ist, welches zwei Antriebswellen 8 aufweist.

Der Elektromotor 7 wird ebenfalls von der elektronischen Steuerung 4 drehzahlgeregelt.

Auf jeder Antriebswelle 8 ist ein Verdrängerelement 9 aufgesteckt und damit starr verbunden.

Der Abteileinrichtung ist eine Transporteinrichtung nachgeschaltet, die aus zwei Endlosförderbändern 10 besteht. Die Förderbänder 10 sind um Umlenkräder 11 geführt, von denen welche als Antriebsräder mit einem drehzahlregelbaren Elektromotor 12 verbunden sind, der wiederum von der elektronischen Steuerung 4 geregelt wird.

Die Förderbänder 10 laufen im Gegensinn um und transportieren die abgeteilten Würste 13 in Pfeilrichtung 14 ab.

Die beiden Antriebswellen 8 für die Verdrängereinheit 6 ragen aus dem Getriebe 18 im Abstand und parallel zueinander heraus und werden synchron und gegenläufig angetrieben.

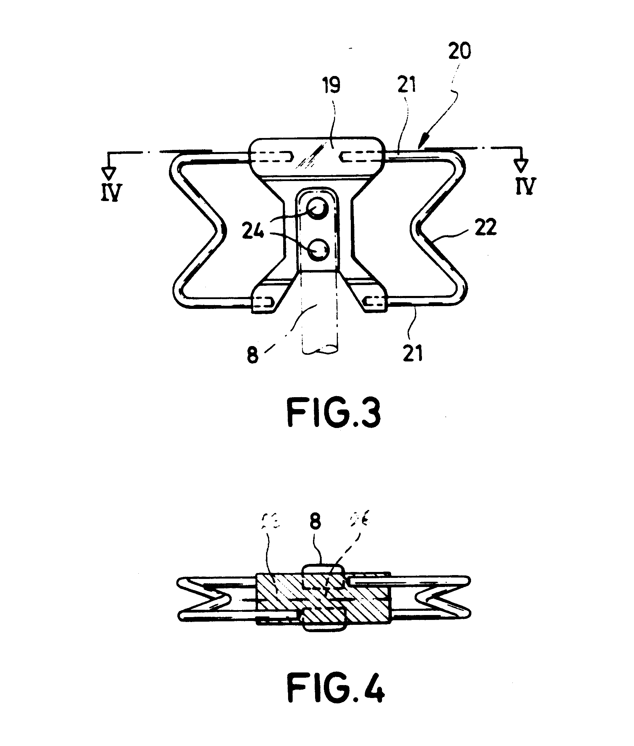

Wie aus den Figuren 3 und 4 ersichtlich ist, ist jedes Verdrängerelement 9 in der Form eines Drahtbügels 20 gebogen, wobei die etwa parallel zueinander verlaufenden Drahtbügel-Enden 21 in einen Lagerkörper 19 eingesteckt und dort z.B. durch Verkleben befestigt sind. Der Quersteg 22 des Drahtbügels 20 ist V-förmig gebogen in Richtung auf den Lagerkörper 19.

Der Drahtbügel 20 ist aus einem biegesteifen Draht, beispielsweise aus Chrom-Nickelstahl gebogen, so daß sich der Drahtbügel beim Abteilen des Wurststranges praktisch nicht deformiert. Es hat sich gezeigt, daß dabei ein Draht von einem Durchmesser von etwa 2 mm je nach Kalibergröße der Würste ausreicht.

Wie aus der Figur 4 hervorgeht, ist der Drahtbügel 20 schräg am Lagerkörper 19 angebracht, d.h., die Enden 21 des Drahtbügels 20 sind gegenüber der Mittelebene 23 des Lagerkörpers 19 wechselseitig versetzt angebracht. Diese Mittelebene ist strichpunktiert in Figur 4 eingezeichnet.

Der Lagerkörper 19 ist auf der strichpunktiert in der Figur 3 eingezeichneten Antriebswelle 8 befestigt.

Zu diesem Zweck ist das Ende der Antriebswelle 8 als Vierkant ausgebildet, das zur Bildung einer Nut geschlitzt ist, so daß das Ende jeder Antriebswelle 8 gabelförmig ausgebildet ist (Figur 3 und 4).

Der Lagerkörper 19 ist auf beiden gegenüberliegenden Flachseiten zur Bildung einer Feder 26 eingefräst, auf welche das gabelförmige Ende der Antriebswelle 8 aufgeschoben ist.

Wie aus der Figur 3 hervorgeht, ist das gabelförmige Ende der Antriebswelle 8 mittels Schrauben 24 mit der Feder 24 des Lagerkörpers 19 fest verbunden.

Der Lagerkörper 19 kann z.B. im Spritzgußverfahren aus Kunststoff hergestellt sein.

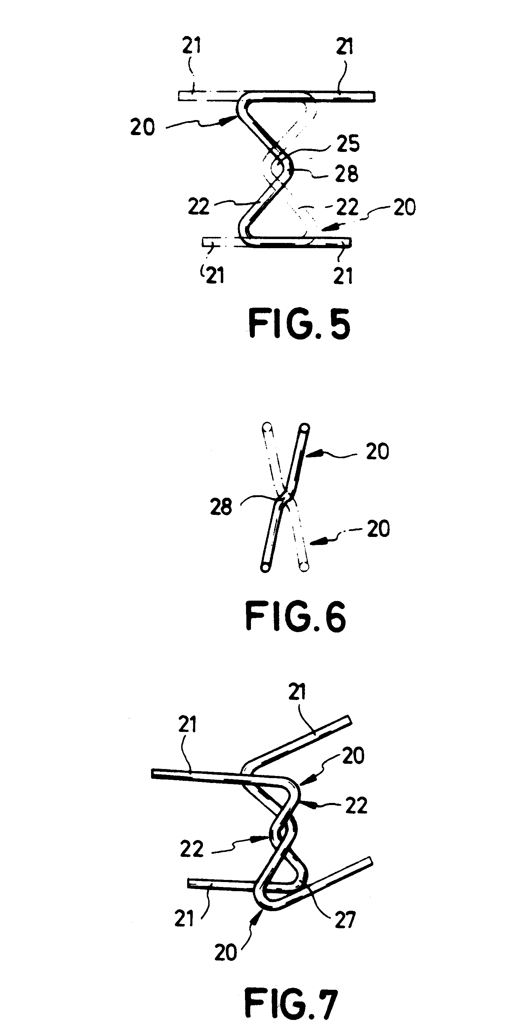

In Figur 5 sind zwei zusammenwirkende Drahtbügel 20 als Verdrängerelemente in der Endstellung des Abteilens gezeigt.

Der besseren Übersicht wegen ist dabei einer der Drahtbügel strichpunktiert gezeichnet.

In dieser Stellung lassen die zusammenwirkenden Drahtbügel 20 in ihrem Kreuzungspunkt nur einen sehr kleinen Durchlaß 25 frei. Die Drahtbügel greifen dabei verschränkt ineinander und berühren sich im Bereich Ihrer V-Wurzeln. Der Durchlaß 25 ist somit nur so groß, daß die beim Abteilen zusammengepreßte Wursthülle noch Platz findet.

In Figur 7 sind zwei zusammenwirkende Drahtbügel 20 in einer Stellung gezeigt, bevor sie den Endzustand während des Abteilens eingenommen haben.

Dabei ist ersichtlich, daß die untere Biegung 27 des Quersteges 22 des einen Drahtbügels die Ebene des anderen Drahtbügels durchstößt, so daß sich die beiden Drahtbügel 20 auch während dieser Phase des verschränkt Ineinandergreifens nicht stören.

In der Figur 6 ist gezeigt, daß jeder Drahtbügel 20 im Bereich der V-Wurzel 28 abgekröpft sein kann, dergestalt, daß dann die V-Schenkel jedes einzelnen Drahtbügels 20 in benachbarten, etwa parallelen Ebenen angeordnet sind, die etwa im Abstand des Drahtdurchmessers verlaufen.

Der besseren Übersicht wegen ist in Figur 6 einer der beiden ineinandergreifenden Drahtbügel strichpunktiert gezeichnet.

Jeder Lagerkörper 19 kann mit einem einzigen Drahtbügel 20 versehen sein.

In Beispiel nach Figur 3 trägt jedoch der Lagerkörper 19 zwei gegenüberliegend angeordnete Drahtbügel 20, so daß bei jeder vollen Umdrehung des Lagerkörpers um die Antriebswelle 8 jeweils zwei Abteilvorgänge durchgeführt werden.

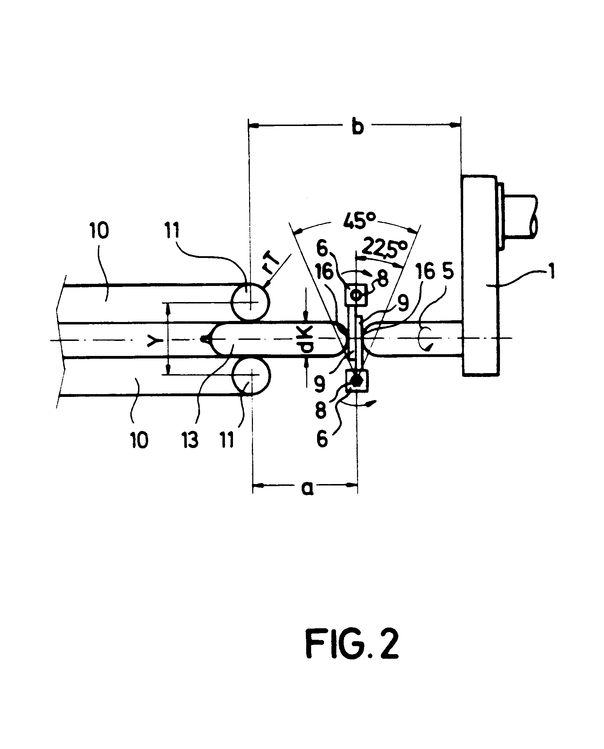

Die Vorrichtung wird im Nachfolgenden zusammenfassend in ihrer Arbeitsweise geschildert:
Wie insbesondere in der Figur 2 dargestellt, wird der von der Füllmaschine 17 kommende Wurststrang 5 durch den Bremsring 1, der über das Getriebe 2 durch den Elektromotor 3 angetrieben wird, in Drehung versetzt, wie durch den Pfeil angedeutet ist.

Die gegensinnig und synchron umlaufenden Verdrängerelemente 9 (in Figur 2 durch die Pfeile angedeutet), kommen mit dem sich drehenden Wurststrang 5 in Berührung, wenn sie je nach Kaliber etwa einen Winkel von 45° einschließen.

Während die Verdrängerelemente 9 mit dem Wurststrang 5 in Eingriff sind, ist ihre Drehzahl so geregelt, daß die Umlaufgeschwindigkeit ihres Kreuzungspunktes (Durchlaß 25 für die Wursthülle) mit der Fortschreitgeschwindigkeit des Wurststranges 5 im wesentlichen übereinstimmt, die durch die Endlosbänder 10 erzwungen wird.

Der Wurststrang 5 dreht sich während des Einengens durch die Verdrängerelemente 9 noch so lang, bis das vordere, bereits abgedrehte Ende der Wurst 13 von den Endlosbändern 10 erfaßt wird und eine weitere Einschnürung bei der folgenden Portion erfolgt. Nachdem sich der rückwärtige Wurststrang 5 weiterdreht, erfolgt dabei ein Abdrehen des rückwärtigen Endes 16 der Wurst.

Wenn die Verdrängerelemente 9 mit konstanter Drehzahl umlaufen, werden Würste einer bestimmten Länge erzeugt, die bei einem gleichbleibenden Kaliber eine bestimmte Portionsgröße aufweisen.

Sollen nun Würste mit größerer Länge hergestellt werden, so regelt die elektronische Steuerung 4 die Umlaufgeschwindigkeit der Verdrängerelemente 9 so, daß sie außer Eingriff mit dem Wurststrang 5, also funktionslos, langsamer umlaufen.

Um Würste sehr großer Länge erzeugen zu können, kann die Umlaufgeschwindigkeit der Verdrängerelemente 9 während der funktionslosen Phase bis auf Null geregelt werden, so daß sie eine bestimmte Zeit stillstehen. Um dabei dennoch ein sicheres Abteilen zu ermöglichen, wird schließlich der Bremsring 1 stillgesetzt, so daß sich der Wurststrang 5 nicht dreht und deshalb ohne Störung zwischen die Endlosbänder 10 einlaufen kann. Erst wenn die Verdrängerelemente 9 den Wurststrang 5 abteilen, wird in diesem Fall der Bremsring 1 in Drehung versetzt und somit die Wurst von sehr großer Länge abgedreht.

Wenn die Umlaufgeschwindigkeit der Verdrängerelemente 9 während ihrer funktionslosen Phase vergrößert wird, werden kürzere Würste erzielt. Die kleinste Portionslänge ergibt sich aus dem Abstand a in Figur 2, abhängig vom Radius rT der Umlenkräder und der Länge rV der Verdrängerelemente 9.

Wenn Würste mit sehr großem Kaliber hergestellt werden sollen, können die Verdrängerelemente durch Abziehen der Lagerkörper 19 von den Antriebswellen 8 entfernt und durch größere bügelförmigen Verdrängerelemente ersetzt werden. Dabei muß auch der Bremsring gegen einen größeren ausgetauscht werden. Außerdem ist der Abstand Y der Endlosbänder 10 in bekannter Weise zu vergrößern. Selbstverständlich muß die Verdrängereinheit dann so ausgebildet sein, daß auch der Abstand der Antriebswellen 8 entsprechend vergrößert werden kann.

Mit der Vorrichtung können nicht nur aus Wurstbrät gefertigte Würste hergestellt werden, sondern auch solche aus anderen pastösen Massen.

**Patentansprüche**

1. Vorrichtung zum Abteilen eines von einer Füllmaschine kommenden durchgehenden Wurststranges in einzelne Würste, bestehend aus einer Einrichtung zum Drehen des Wurststranges, einer Abteileinrichtung und einer die abgeteilten Würste weiterfördernden Transporteinrichtung, wobei die Abteileinrichtung mindestens zwei um je eine Antriebsachse gegenläufig umlaufende angetriebene Verdrängerelemente aufweist, die jeweils als V-förmige Platte ausgebildet sind, welche Verdrängerelemente gegensinnig schräg angeordnet sind und beim Abteilvorgang mit den V-Ausschnitten verschränkt ineinandergreifen,
**dadurch gekennzeichnet,**
daß jedes Verdrängerelement (9) aus einem Drahtbügel (20) besteht, der in der Kontur der V-förmigen Platte gebogen ist.

2. Vorrichtung nach Anspruch 1,
**dadurch gekennzeichnet,**
daß jeder V-förmige Drahtbügel (20) im Bereich der V-Wurzel (28) abgekröpft ist, dergestalt, daß die V-Schenkel in benachbarten, etwa parallelen Ebenen angeordnet sind, die etwa im Abstand des Drahtdurchmessers verlaufen.

3. Vorrichtung nach Anspruch 1 oder 2,
**dadurch gekennzeichnet,**
daß der Draht einen Durchmesser von etwa 2 mm aufweist.

4. Vorrichtung nach mindestens einem der Ansprüche 1 bis 3,
**dadurch gekennzeichnet,**
daß jeder als Verdrängerelement (9) dienende Drahtbügel (20) mit seinen Bügelenden (21) in einem Lagerkörper (19) gehalten ist, der auf der Antriebswelle (8) befestigt ist.

5. Vorrichtung nach Anspruch 4,
**dadurch gekennzeichnet,**
daß jeder Lagerkörper (19) aus Kunststoff besteht.

6. Vorrichtung nach mindestens einem der Ansprüche 1 - 5,
**dadurch gekennzeichnet,**
daß der Lagerkörper (19) mit der Antriebswelle (8) in der Art eines Nut- und Federeingriffes verbunden ist, wobei sich Nut und Feder in Achsrichtung der Antriebswelle (8) erstrecken.

FIG.1

FIG. 2

**FIG.3**

**FIG.4**

EP 0 474 970 A1

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DD-A-247 829  (RAABE) <br> * das ganze Dokument * * <br> – – – | 1,3 | A 22 C 11/10 |
| Y | GB-A-1 187 635  (UNION CARBIDE) <br> – – – | 1,3 | |
| A | GB-A-1 187 635  (* Seite 3, Zeile 16 - Zeile 32; Abbildung 3 *) <br> – – – | 2 | |
| A | US-A-3 835 503  (TOWNSEND) <br> * Spalte 2, Zeile 4 - Zeile 9 * * * Spalte 4, Zeile 4 - Zeile 33 * * <br> * Spalte 7, Zeile 13 - Spalte 8, Zeile 25; Abbildungen 3,5,6 * * <br> – – – | 1,2,4,5 | |
| A | US-A-1 901 452  (JACOBSON) <br> – – – | | |
| A | US-A-1 718 896  (DIETRICH) <br> – – – | | |
| A | DE-C-119 006  (TOOF) <br> – – – | | |
| A | FR-A-2 214 413  (SCHNELL) <br> – – – | | |
| A | FR-A-1 358 664  (TOWNSEND) <br> – – – – – | | |

**RECHERCHIERTE SACHGEBIETE (Int. Cl.5)**

A 22 C

Der vorliegende Recherchenbericht wurde für alle Patentansprüche erstellt

| Recherchenort | Abschlußdatum der Recherche | Prüfer |
|---|---|---|
| Den Haag | 14 November 91 | DE LAMEILLIEURE D. |